# EUROPEAN PATENT APPLICATION

(11) **EP 4 755 525 A1**
(43) Date of publication of application: **10.06.2026**
(21) Application number: 25775168.5
(22) Date of filing: 21.03.2025
(51) Int. Cl.: B05C 5/02, B05C 11/10, H01M 4/04

(54) **SLOT DIE APPARATUS**

(30) Priority: 27.03.2024 KR 20240041769
(71) Applicant: LG Energy Solution, Ltd., Seoul 07335 (KR)
(72) Inventor: YOU, Seong Jae, Daejeon 34122 (KR); KIM, Sang Min, Daejeon 34122 (KR); MOON, Young Gyu, Daejeon 34122 (KR); KIM, Min Cheol, Daejeon 34122 (KR)
(74) Representative: Plasseraud IP
(86) International application number: PCT/KR2025/095060
(87) International publication number: WO 2025/206873

(57) **Abstract**

Disclosed herein relates to a slot die device for coating an injected slurry by discharging, including: a die block including a first die having a protruding die lip and a second die coupled to the first die; and a shim assembly interposed between the first die and the second die, and comprising a discharge outlet through which the slurry is discharged, wherein the shim assembly includes: a coupling part coupled to the second die; and a shim part protruding from one side of the coupling part in a shape that is open at the one side, wherein the shim assembly forms the discharge outlet into an open portion of the shim part located between the first die and the coupling part.

## Description

### [Technical Field]

The present disclosure relates to a slot die device, and more particularly to a slot die device designed to facilitate the replacement of a lip.

This application claims the benefit of Korean Patent Application No. 10-2024-0041769, filed on March 27, 2024, the disclosure of which is incorporated herein by reference.

### [Background]

Secondary batteries that can be charged and discharged are attracting attention as a power source for devices that require high power and large capacity, including electric vehicles, hybrid electric vehicles, plug-in hybrid electric vehicles, and the like, which are being proposed as a way to solve air pollution from conventional gasoline and diesel vehicles that use fossil fuels.

In terms of battery shape, there is a high demand for prismatic and pouch-type secondary batteries that can be applied to products such as mobile phones due to their thin thickness, and in terms of materials, there is a high demand for lithium secondary batteries such as lithium-ion batteries and lithium-ion polymer batteries, which have advantages such as high energy density, discharge voltage, and output stability.

A secondary battery has a structure in which an electrode assembly consisting of an electrode and a separator in stored a battery case together with an electrolyte.

In general, the electrodes are manufactured by applying a slurry containing an active material on a sheet-shaped current collector, and a slot die device is most often utilized for the application of the slurry.

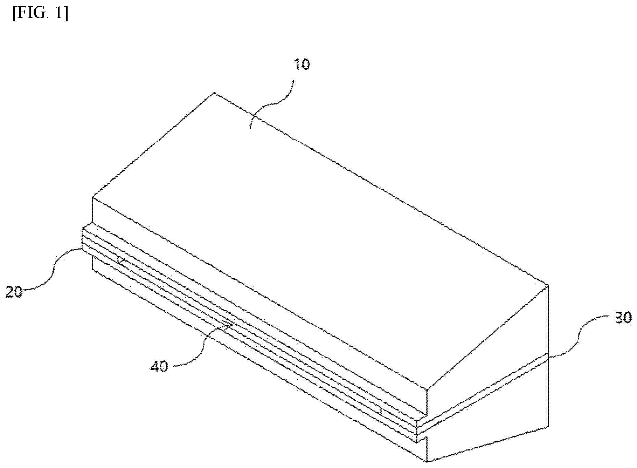

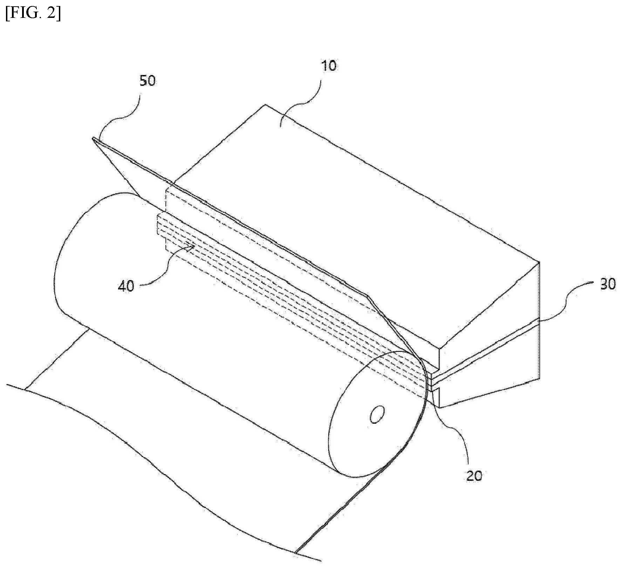

FIG. 1 is a perspective view of a conventional slot die 10 device, and FIG. 2 is a simplified illustration of the process of coating a slurry on a sheet 50 using the slot die 10 device of FIG. 1.

In general, the principle of the slot die 10 device is to form a slit 40 by interposing a die shim 30 between a pair of dies 10, as shown in FIG. 1, and to guide, discharge, and coat the slurry passing through the slit 40 with a die lip 20 protruding from the leading end of the die 10, as shown in FIG. 2.

However, since the slurry handled in the manufacturing process of a secondary battery is a fluid having a high viscosity, wear may occur on the die lip 20 due to prolonged use.

Conventionally, it is troublesome to remove the die 10 itself in order to polish the worn die lip 20. Of course, a slot die 10 device having a structure in which only the die lip 20 part can be separated separately has been developed to solve this problem, but there is a problem that it is difficult to fully engage the die 10 due to the machining tolerance of the straightness between the die 10 and the die lip 20.
(Prior art reference) Korean Public Patent No. 10-2615168

### [Summary]

### [Technical Problem]

Therefore, the present disclosure was invented to solve the above problems, and aims to provide a slot die device having a structure in which the die lip portion can be easily removed and replaced when it is worn.

Other objects and advantages of the present disclosure will be understood from the following description, which will become more apparent with reference to the embodiments of the present disclosure. It will also be readily apparent that the objects and advantages of the present disclosure may be realized by the means and combinations thereof set forth in the claims of the patent.

### [Technical Solution]

According to the present disclosure, there is provided a slot die device for coating by discharging an injected slurry.

The slot die device includes: a die block including a first die having a protruding die lip and a second die coupled to the first die; and a shim assembly interposed between the first die and the second die, and comprising a discharge outlet through which the slurry is discharged, wherein the shim assembly includes: a coupling part coupled to the second die; and a shim part protruding from one side of the coupling part in a shape that is open at the one side, wherein the shim assembly forms a discharge outlet into an open portion of the shim part located between the first die and the coupling part.

The die block further includes a manifold in which a slurry is stored, wherein the slurry travels through the manifold to the shim assembly and may be discharged.

The coupling part may have a square frame shape with a center opening corresponding to a shape of the manifold.

The manifold may be formed in at least one of the first die and the second die.

A position of a leading end of the coupling part may correspond to a position of a leading end position of the die lip included in the first die.

The leading end of the coupling part may protrude beyond the leading end of the second die.

The shim part may include: a support part coupled to a rear end of the coupling part, and extending along a longitudinal direction of the coupling part; and a pair of guide parts coupled to both ends of the support part, and extending along a width direction of the coupling part to form a discharge outlet.

A width size of the discharge outlet may correspond to a spacing distance of the guide parts.

The shim part may further include: at least one separating part coupled to the support part to be positioned between the pair of guide parts, and extending along a width direction of the coupling part.

The shim part may further include: an extending part coupled to an end of the guide part, and extending along the longitudinal direction of the coupling part.

A width size of the discharge outlet may correspond to a spacing distance of the extending part.

The shim assembly may be configured to be removably attached to the die block.

### [Advantageous Effects]

According to the slot die device of the present disclosure, when a die lip is worn, the worn die lip can be efficiently removed.

### [Brief Description of the Drawings]

FIG. 1 is a perspective view of a conventional slot die device.
FIG. 2 is a schematic diagram illustrating a process of coating a slurry with the slot die device of FIG. 1.
FIG. 3 is a perspective view of a slot die device according to a first embodiment of the present disclosure.
FIG. 4 is an exploded perspective view of the slot die device of FIG. 3.
FIG. 5 is an exploded perspective view of a variant of the slot die device of FIG. 3.
FIG. 6 is a perspective, top, and front view of a shim assembly included in the slot die device of FIG. 3.
FIG. 7 is a perspective, top, and front view illustrating a variant of the shim assembly of FIG. 6.
FIG. 8 is a perspective, top, and front view of a shim assembly included in a slot die device according to a second embodiment of the present disclosure.
FIG. 9 is a perspective, top, and front view illustrating a variant of the shim assembly of FIG. 8.
FIG. 10 is a perspective, top, and front view of a shim assembly included in a slot die device according to a third embodiment of the present disclosure.
FIG. 11 is a perspective, top, and front view illustrating a variant of the shim assembly of FIG. 10.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

The present disclosure relates to a slot die device, and more particularly to a slot die device designed to facilitate the replacement of a lip.

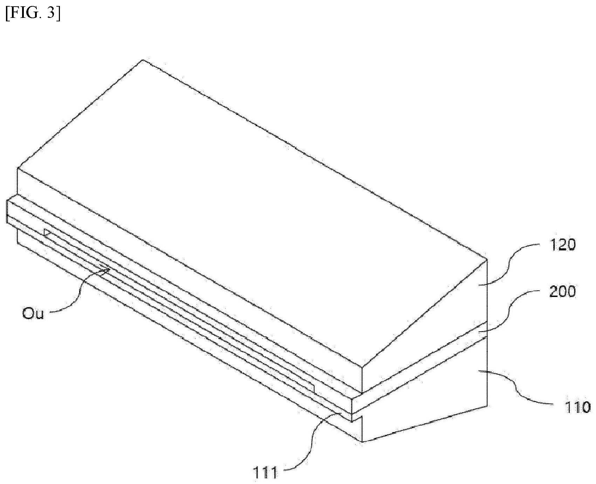

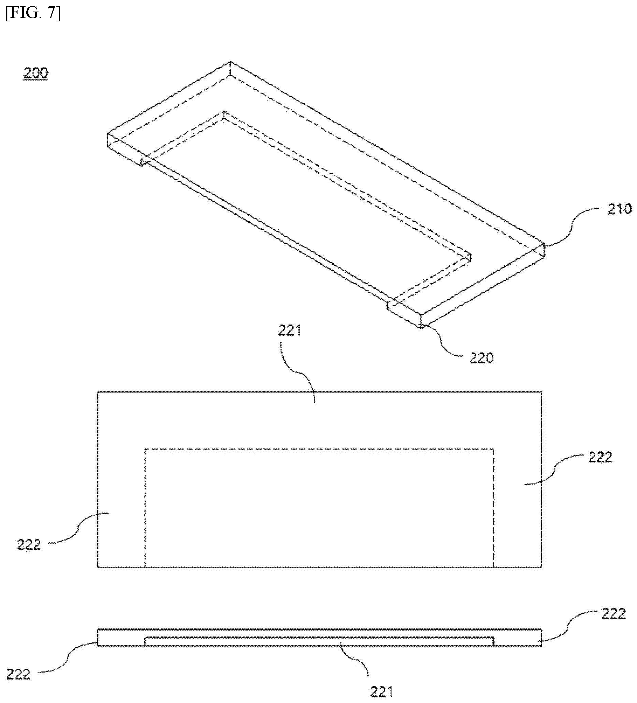

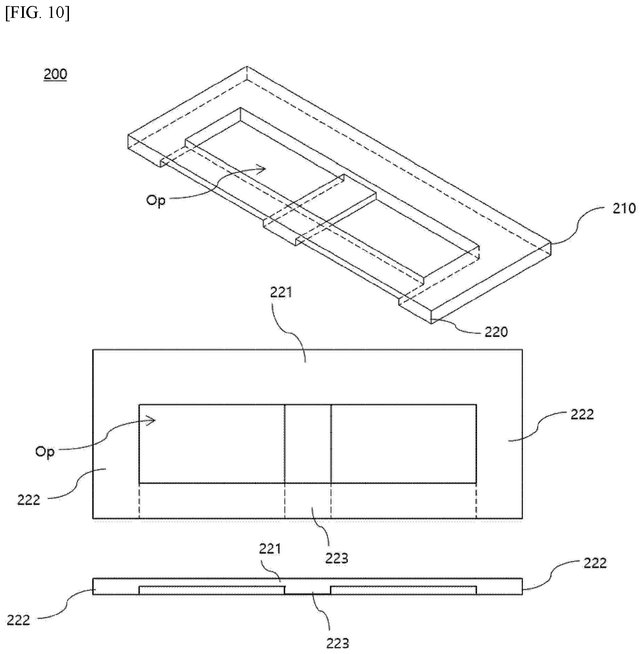

FIGS. 3 through 6 relate to a slot die device according to a first embodiment of the present disclosure, FIGS. 7 through 9 relate to a slot die device according to a second embodiment of the present disclosure, and FIGS. 10 through 11 relate to a slot die device according to a third embodiment of the present disclosure.

Hereinafter, specific embodiments of the slot die device of the present disclosure will be described in detail with reference to the accompanying drawings. For reference, the directions from front to rear, up and down and left and right, which designate relative positions, used in the following description are intended to aid in the understanding of the disclosure and refer to the directions shown in the drawings unless otherwise defined.

Herein, a longitudinal direction of a configuration is defined as referring to a direction corresponding to the longest length of the side of the corresponding configuration shown in the drawings relative to the horizontal direction, and a width direction of a configuration is defined as referring to a direction orthogonal to the longitudinal direction relative to the horizontal direction.

### (First embodiment)

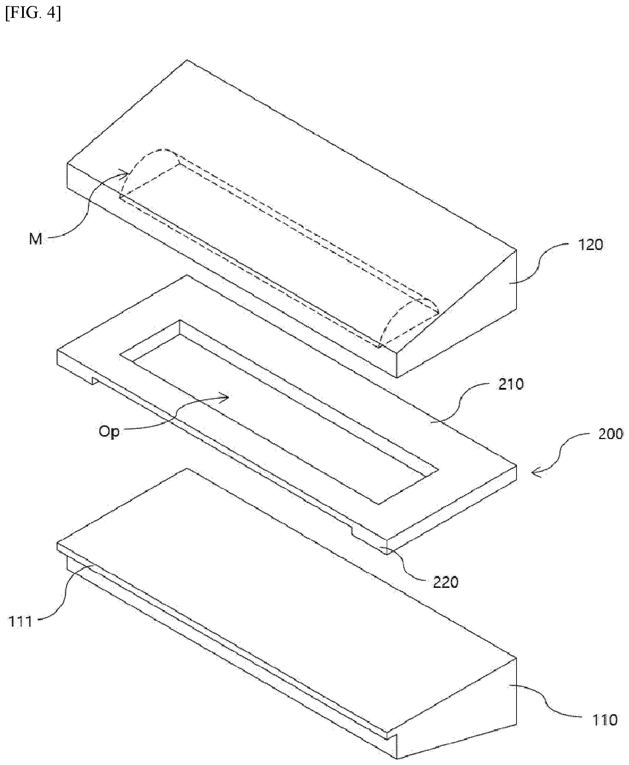

FIG. 3 is a perspective view of a slot die device according to a first embodiment of the present disclosure, and FIG. 4 is an exploded perspective view of the slot die device of FIG. 3.

The slot die device of the present disclosure includes a die block including a pair of dies and a shim assembly 200, as shown in FIGS. 3 and 4.

The die block specifically includes a first die 110 and a second die 120 coupled to the first die 110.

The first die 110 has a die lip 111 protruding from its leading end.

The die lip 111 is formed extending from the leading end of the first die 110 along the longitudinal direction of the first die 110.

The die block of the present disclosure may further include a manifold M in which a slurry is stored.

According to some embodiments, the manifold M may be formed in the second die 120 as shown in FIG. 4.

An externally supplied slurry is introduced into the die block, preferably an inlet (not shown) through which the slurry is introduced is formed at a position in communication with the manifold M. Thus, the slurry is introduced into the second die 120 and temporarily stored in the manifold M.

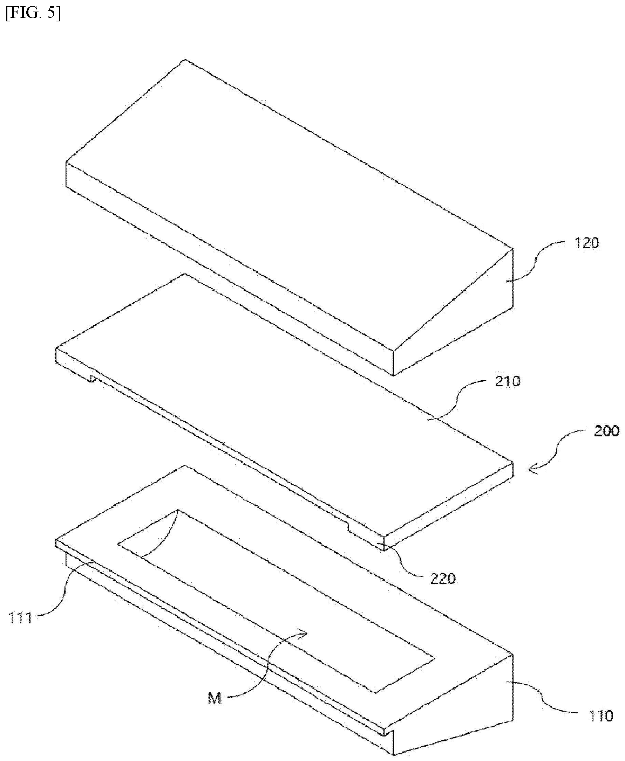

FIG. 5 is an exploded perspective view illustrating a variant of the slot die device of FIG. 3.

In some other embodiments, the manifold M may be formed in the first die 110 as shown in FIG. 5. In this case, too, an inlet for the slurry is formed at a position in communication with the manifold M. Thus, the slurry is introduced into the first die 110 and temporarily stored in the manifold M.

The shim assembly 200 is interposed between the first die 110 and the second die 120.

The shim assembly 200 includes a discharge outlet (Ou) from which slurry transferred from the die block is discharged.

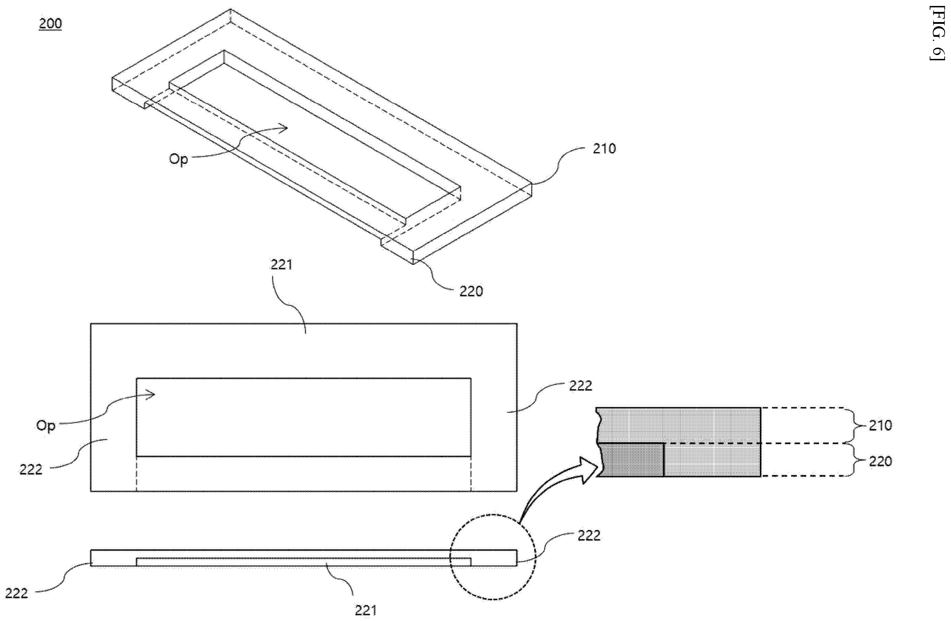

FIG. 6 is a perspective, top, and front view of a shim assembly 200 included in the slot die device of FIG. 3, and FIG. 7 is a perspective, top, and front view illustrating a variant of the shim assembly 200 of FIG. 6.

The shim assembly 200 includes a coupling part 210 and a shim part 220 protruding from one side of the coupling part 210.

The coupling part 210 serves to replace the die lip 111 as a direct coupling portion to the second die 120.

The coupling part 210 has a shape corresponding to the inner surface of the second die 120 where the die lip 111 is not formed in the second die block 120.

The shim assembly 200 is configured to be detachable from the die block. That is, in the event of wear on the coupling part 210 serving as the die lip 111, the shim assembly 200 can be detached from the die block and polished.

According to some embodiments, when the second die 120 includes a manifold M as shown in FIG. 4, the coupling part 210 has a square frame shape with a center opening corresponding to the shape of the manifold M. Thus, the slurry introduced through the manifold M of the second die 120 passes through an opening part Op of the coupling part 210 and the flow direction is controlled by the shim part 220 and the inner surface of the first die 110.

According to another embodiment, when the second die 120 does not include a manifold M as shown in FIG. 5, the coupling part 210 has a flat plate shape corresponding to the flat inner surface shape of the second die 120 as shown in FIG. 7. Thus, the flow direction of the slurry introduced through the manifold M of the first die 110 is controlled by the structure of the flat plate-shaped coupling part 210 and the shim part 220 thereof.

Since the coupling part 210 replaces the die lip 111 excluded from the second die 120, a position of the leading end of the coupling part 210 corresponds to a position of the leading end of the die lip 111 included in the first die 110. That is, the leading end of the coupling part 210 is coupled to the second die 120 so that it is drawn out further than the leading end of the second die 120 to act as a die lip 111.

The shim part 220 is formed to protrude from one side of the coupling part 210 in a shape that is open on the one side, as shown in FIG. 6.

The shim assembly 200 forms a discharge outlet (Ou) into the open portion of the shim part 220 located between the first die 110 and the coupling part 210. That is, the slurry travels through the manifold M of the die block to the shim assembly 200 and is discharged through the discharge outlet Ou.

The shim part 220 included in the slot die device according to the first embodiment of the present disclosure includes a support part 221 and a pair of guide parts 222. Specifically, the shim part 220 includes a support part 221 coupled to a rear end of the coupling part 210, extending along a longitudinal direction of the coupling part 210, and a pair of guide parts 222 coupled to both ends of the support part 221, extending along a width direction of the coupling part 210 to form a discharge outlet Ou.

The support part 221 prevents the slurry transferred from the die block from leaking out of the rear end of the slot die device, and the guide parts 222 coupled to both ends of the support part 221 guide the slurry to prevent it from leaking out of the side end of the slot die device in the process of traveling to the discharge outlet Ou.

The amount of slurry transferred to the discharge outlet Ou and the width to be coated can be adjusted by the spacing distance of the guide part 222. That is, the width size of the discharge outlet Ou is determined in correspondence to the spacing distance of the guide part 222.

### (Second embodiment)

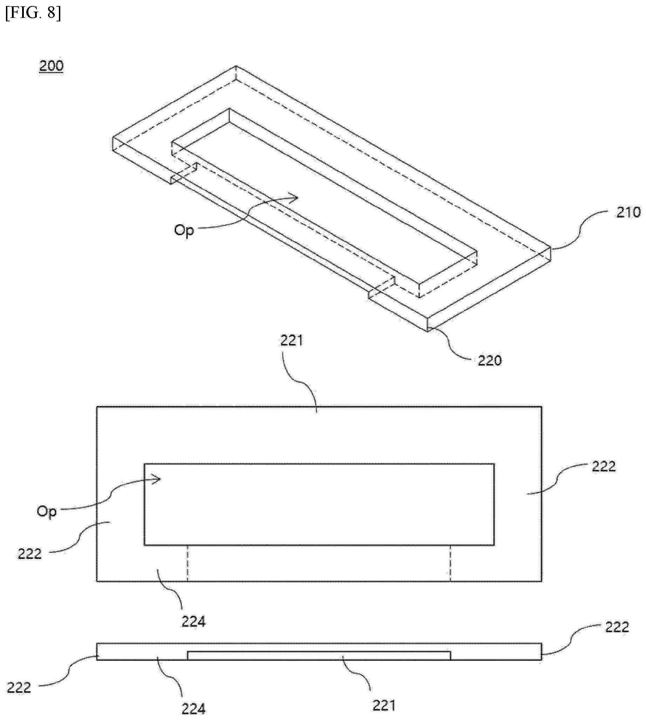

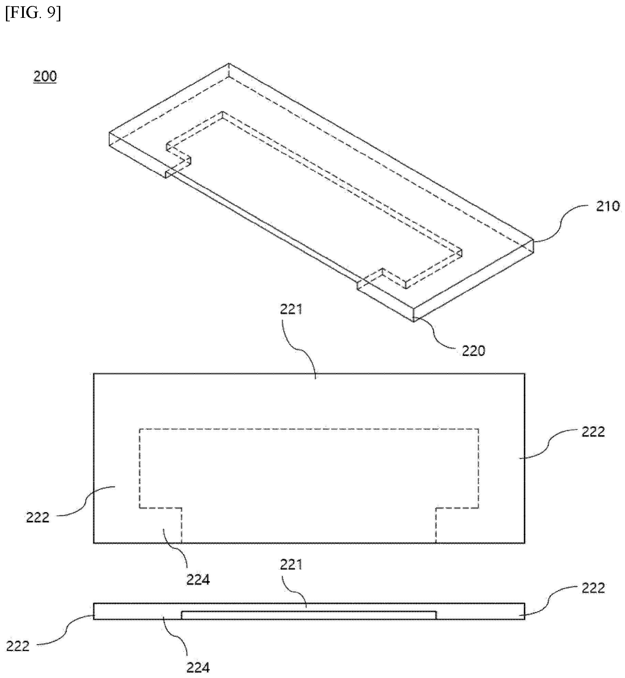

FIG. 8 is a perspective, top, and front view of a shim assembly 200 included in a slot die device according to a second embodiment of the present disclosure, and FIG. 9 is a perspective, top, and front view illustrating a variant of the shim assembly 200 of FIG. 8.

The slot die device according to the second embodiment of the present disclosure may further include an extending part 224 as shown in FIG. 8.

Specifically, the shim part 220 further includes an extending part 224 that is coupled to an end of the guide part 222.

The extending part 224 is coupled to the end of the guide part 222 and extends along the longitudinal direction of the coupling part 210. The extending part 224 serves to substantially reduce the width of the discharge outlet Ou, thereby limiting the position and amount of coating of the discharged slurry. For example, as the extending part 224 becomes longer, the width of the discharge outlet Ou becomes smaller, and conversely, as the extending part 224 becomes shorter, the width of the discharge outlet Ou approaches the spacing between the pair of guide parts 222.

In other words, the size of the width of the discharge outlet Ou of the slot die device according to the second embodiment of the present disclosure corresponds to the spacing distance of the extending part 224, and not to the guide part 222.

According to some embodiments, the shim assembly 200 may include an opening part Op in the coupling part 210 corresponding to the shape of the manifold M as shown in FIG. 8.

According to some other embodiments, the shim assembly 200 may include a flat plate-shaped coupling part 210 in which the opening part Op is not formed, as shown in FIG. 9.

The shape of the coupling part 210 may be determined by whether or not a manifold M is formed in the second die 120 that is coupled to the coupling part 210.

### (Third embodiment)

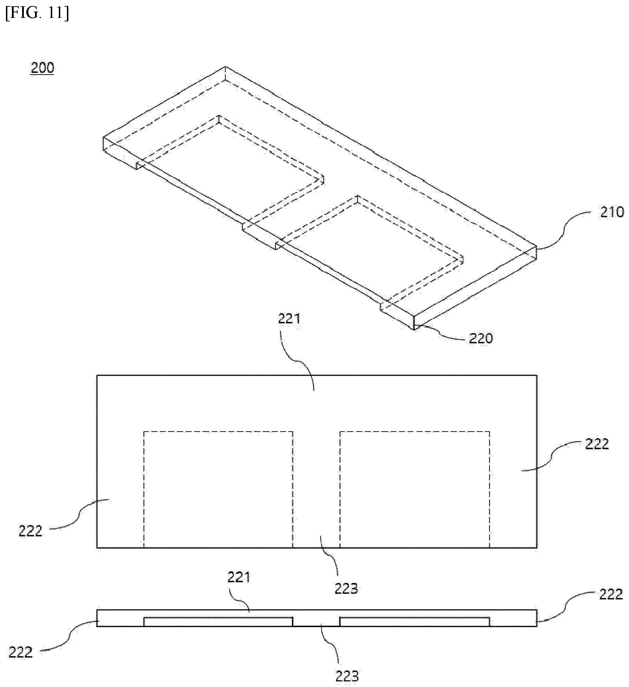

FIG. 10 is a perspective, top, and front view of a shim assembly 200 included in a slot die device according to a third embodiment of the present disclosure, and FIG. 11 is a perspective, top, and front view illustrating a variant of the shim assembly 200 of FIG. 10.

The slot die device according to the third embodiment of the present disclosure may further include a separating part 223 as shown in FIG. 10.

Specifically, the shim part 220 further includes at least one separating part 223 coupled to the support part 221 so as to be positioned between the pair of guide parts 222, and formed extending along a width direction of the coupling part 210.

The separating part 223 serves to compartmentalize the discharge outlet Ou along a longitudinal direction of the shim assembly 200. Thus, a slot die device including the separating part 223 discharges slurry into the discharge outlet Ou compartmentalized by the separating part 223. For example, if one separating part 223 is positioned between the guide parts 222, two independent coating layers may be formed, and if N separating parts 223 are positioned, N+1 independent coating layers may be formed.

According to some embodiments, the shim assembly 200 may include an opening part Op in the coupling part 210 corresponding to the shape of the manifold M as shown in FIG. 10. In this case, the separating part 223 may also compartmentalize across the opening part Op.

According to some other embodiments, the shim assembly 200 may include a flat plate-shaped coupling part 210 in which the opening part Op is not formed, as shown in FIG. 11. In this case, the slurry stored in the manifold M is introduced independently into the spaces compartmentalized by the separating parts 223, respectively.

The shape of the coupling part 210 may be determined by whether or not the manifold M is formed in the second die 120, which is coupled to the coupling part 210.

The present disclosure has been described in more detail above with reference to the drawings and embodiments. However, it should be understood that the configurations shown in the drawings or embodiments described herein are only one embodiment of the disclosure and do not represent all of the technical ideas of the disclosure, and that there may be various equivalents and modifications that may be substituted for them in the present application.\

### (Description of Reference Numerals)

10: (PRIOR ART) DIE
20: (PRIOR ART) DIE LIP
30: (PRIOR ART) DIE SHIM
40: (PRIOR ART) SLIT
50: (PRIOR ART) SHEET
110: FIRST DIE
111: DIE LIP
120: SECOND DIE
200: SHIM ASSEMBLY
210: COUPLING PART
220: SHIM PART
221: SUPPORT PART
222: GUIDE PART
223: SEPARATING PART
224: EXTENDING PART
Ou: DISCHARGE OUTLET
Op: OPENING PART
M: MANIFOLD

## Claims

1. A slot die device for coating an injected slurry by discharging, comprising:
a die block comprising a first die having a protruding die lip and a second die coupled to the first die; and
a shim assembly interposed between the first die and the second die, and comprising a discharge outlet through which the slurry is discharged, wherein
the shim assembly comprises:
a coupling part coupled to the second die; and
a shim part protruding from one side of the coupling part in a shape that is open at the one side, wherein
the shim assembly forms the discharge outlet into an open portion of the shim part located between the first die and the coupling part.

2. The slot die device of claim 1, wherein
the die block further comprises a manifold in which a slurry is stored, wherein
the slurry travels through the manifold to the shim assembly and is discharged.

3. The slot die device of claim 2, wherein
the coupling part has a square frame shape with a center opening corresponding to a shape of the manifold.

4. The slot die device of claim 2, wherein
the manifold is formed in at least one of the first die and the second die.

5. The slot die device of claim 1, wherein
a position of a leading end of the coupling part corresponds to a position of a leading end of the die lip included in the first die.

6. The slot die device of claim 1, wherein
the leading end of the coupling part protrudes beyond the leading end of the second die.

7. The slot die device of claim 1, wherein
the shim part comprises:
a support part coupled to a rear end of the coupling part, and extending along a longitudinal direction of the coupling part; and
a pair of guide parts coupled to both ends of the support part, and extending along a width direction of the coupling part to form the discharge outlet.

8. The slot die device of claim 7, wherein
a width size of the discharge outlet corresponds to a spacing distance of the guide parts.

9. The slot die device of claim 7,
the shim part further comprises:
at least one separating part coupled to the support part to be positioned between the pair of guide parts, and extending along a width direction of the coupling part.

10. The slot die device of claim 7,
the shim part further comprises:
an extending part coupled to an end of the guide part, and extending along the longitudinal direction of the coupling part.

11. The slot die device of claim 10, wherein
a width size of the discharge outlet corresponds to a spacing distance of the extending part.

12. The slot die device of claim 1, wherein
the shim assembly is configured to be removably attached to the die block.
